# EUROPÄISCHE PATENTSCHRIFT

(11) **EP 0 864 543 B1**
(45) Veröffentlichungstag und Bekanntmachung des Hinweises auf die Patenterteilung: **12.04.2000**
(21) Anmeldenummer: 98101021.8
(22) Anmeldetag: 22.01.1998
(51) Int. Cl.: C03B 5/182, C03B 5/04, C03B 5/185, C03B 5/193, C03B 5/225, C03B 5/235

(54) **Verfahren und Glasschmelzofen zum Herstellen von hoch-schmelzenden Gläsern mit verdampfbaren Komponenten**
Process and glass melting furnace for producing high-temperature melting glasses having vapourisalbe components
Procédé et four de fusion de verre pour la fabrication de verres à haute température de fusion et à composants vaporisables

(30) Priorität: 13.03.1997 DE 19710351
(43) Veröffentlichungstag der Anmeldung: 16.09.1998
(73) Patentinhaber: BETEILIGUNGEN SORG GMBH & CO. KG, D-97816 Lohr am Main (DE)
(72) Erfinder: Pieper, Helmut, Dipl.-Ing., 97816 Lohr am Main (DE); Matthes, Joachim, Dipl.-Ing., 97816 Lohr am Main (DE)
(74) Vertreter: Zapfe, Hans, Dipl.-Ing.

(56) Entgegenhaltungen:
- EP-A- 0 086 858
- EP-A- 0 265 689
- EP-A- 0 293 545
- EP-A- 0 317 551
- DE-A- 2 539 355
- DE-C- 4 327 237
- FR-A- 2 737 487
- US-A- 2 203 269
- US-A- 2 274 643
- US-A- 5 006 144
- SINEVICH A K: "MELTING LOW-ALKALI BOROSILICATE GLASSES IN A CONTINUOUS-PROCESS GAS-FLAME FURNACE" GLASS AND CERAMICS, Bd. 47, Nr. 5 / 06, 1.Mai 1990, Seiten 225-228, XP000204465

## Beschreibung

Die Erfindung betrifft ein Verfahren zum Herstellen von hochschmelzenden Gläsern mit verdampfbaren Komponenten, insbesondere von Gläsern aus der Gruppe Borgläser und Borosilikatgläser mit den Schritten Schmelzen und Läutern einer Schmelze in einem Ofen mit einem Oberofen mit einem Brennraum ohne innere Trennwände, mit Brennern für fossile Brennstoffe und mit einer Schmelzwanne, die einen Schmelzbereich, einen Wannenboden und vor einem Abstehteil und einem Durchlaß zu einem Entnahmeteil eine stufenförmig ausgebildete Bodenerhebung besitzt, die über die gesamte Breite der Schmelzwanne durchgehend ausgebildet ist.

Die Durchführung eines solchen Verfahrens stellt erhebliche Anforderungen an Details der Ofenkonstruktion, die durch glaschemische Vorgänge bedingt sind.

So wird beispielsweise in dem Buch "ABC Glas" (Dr.-Ing. H.-J. Illig; © Deutscher Verlag für Grundstoffindustrie GmbH, Leipzig; 1991; 2. Auflage) auf Seite 36 unter dem Stichwort "Borosilikatgläser" ausgeführt, daß solche Gläser, die für technische Zwecke und als Gerätegläser mit hoher Temperaturfestigkeit eingesetzt werden, einerseits niedrige Ausdehnungskoeffizienten besitzen, andererseits aber hohe Schmelztemperaturen bedingen, die an derzeitige Grenzen des Ofenbaus anstoßen. Solche Gläser neigen zum Ausdampfen von Bor- und Alkalimetalloxiden und zur Entmischung bzw. Phasentrennung (Buch: "Glaschemie"; Prof. Dr. W. Vogel; © Springer-Verlag; 1992; 3. Auflage; Seiten 305 bis 307) sowie zum Auskristallisieren, sämtlich Vorgänge, die zu Störungen im Schmelzbetrieb führen.

Aufgrund dieser Eigenschaften lassen sich die Schmelzverfahren kaum einem der bekannten Öfen zuordnen. Am ehesten kommt hier noch das Grundprinzip des sogenannten "Unit Melters" infrage, der einen Einkammerofen mit quaderförmigem Wannenhohlraum und glatter Decke darstellt, von der sich im Beheizungsbereich keine Zwischenwände in Richtung auf die Schmelze erstrecken.

Derartige Öfen sind in der DE-B-2 034 864, der US-C-2,800,175, der US-C-2,890,547 und der US-C-3,353,941 beschrieben. Es hat sich jedoch gezeigt, daß solche "Unit Melter" ohne Modifikationen nicht gut zum Erschmelzen von Borosilikatgläsern geeignet sind.

Das Buch von Trier "Glasschmelzöfen - Konstruktion und Betriebsverhalten" (Prof. Dr. W. Trier; © Springer-Verlag; 1984) beschreibt und zeigt auf Seite 11 eine Borosilikatwanne, die bei Gewölbeinnentemperaturen von 1650 °C und mehr betrieben wird und bei der zwischen dem Schmelz- und Läuterteil einerseits und dem Homogenisierungsteil andererseits ein Wall angeordnet ist. Über die Länge des Walls in Strömungsrichtung und über den Abstand der Wall-Oberkante vom Schmelzenspiegel werden jedoch keine Angaben gemacht; auch hier liegt dieser Wall hinter dem Läuterteil, ist also selbst keine Läuterbank und für eine ausreichende Läuterung auch viel zu kurz. Einzelheiten von "Unit Meltern" (Querflammenwannen) sind auch auf den Seiten 133 und 154 beschrieben.

Durch die EP-B-0 410 338 ist ein ähnliches Schmelzaggregat bekannt, bei dem vor einem Wall eine Stufe mit zwei Reihen von Bodenelektroden angeordnet ist. Der Wall ist jedoch keine Läuterbank. Die Stufe soll eine Maximalhöhe von 100 mm haben, was weniger ist als etwa 15 % der üblichen Schmelzbadtiefe von etwa 800 mm. Die Stufe dient auch nur zum Ablauf eventuell vorhandener Metalle, um Kurzschlüsse zwischen den Elektroden zu vermeiden. Verschließbare Bodenöffnungen vor der Stufe dienen zum Ablassen solcher Metalle. Bubbler sind den Elektrodenreihen nicht vorgeschaltet. Durch die Elektroden wird eine "Konvektionswalze" erzeugt, deren Oberflächenströmung sich zum Beschickungsende des Ofens bewegt. Dadurch sollen bei reduzierter Ofentemperatur eine von Gemenge freie Schmelzbadoberfläche erzeugt und das in Richtung Durchlaß strömende Glas längere Zeit im Bereich der Glasbadoberfläche gehalten werden.

Dazu ist zu bemerken, daß eine Erhöhung der Glasbadtemperatur zur besseren Läuterung nur dann effektiv mit Strom gelingt, wenn der Strom in einem Bereich eingebracht wird, wo tunlichst keine oder nur eine geringe Rückströmung vorhanden ist. Eine starke Strömungswalze würde ein starkes Vermischen des Glases mit dem anderen Glase bewirken, welches noch geschmolzen wird, und damit die Temperaturerhöhung speziell zum Läutern sehr infragestellen.

Durch die EP-B-0 317 551, die DE-C-39 03 016, die US-C-4,882,736 und die US-C-4,932,035 ist es bekannt, über dem Niveau des Wannenbodens in den Läuterteilen sogenannte Läuterbänke anzuordnen und vor der Läuterbank horizontale Elektroden anzuordnen, um die Läutertemperatur zu steigern. Schmelz- und Läuterteile sind jedoch durch von der Ofendecke ausgehende Trennwände getrennt, die in die Schmelze eintauchen und daher großen Temperaturbelastungen ausgesetzt und mit Kühlkanälen versehen sind.

In den Schmelzteilen können dabei auch Bubbler vorgesehen sein, die jedoch wegen der Trennwände keinen Einfluß auf die Vorgänge im Läuterteil haben. Soweit dies den Schmelzenstrom betrifft, sind Schmelz- und Läuterteile durch enge Bodendurchlässe miteinander verbunden, d.h., durch Kanäle, die sich nicht über die gesamte Breite der Schmelzwanne erstrecken und in denen sich keine Rückströmung ausbildet.

Dabei verweist die DE-C-39 03 016 auch auf die Möglichkeit einer Verarbeitung stark verdampfender Gläser wie Opal-, Blei- und Borgläser, ohne jedoch anzugeben, wie einer Entmischung und Kristallisation entgegengewirkt werden könnte.

Die DE-B-1 210 520 offenbart zur Erzeugung einer geringen Badtiefe eine Läuterbank, die höher als der Wannenboden liegt, aber an ihrem Anfang eine zusätzliche Schwelle und davor einen aus der Schmelze herausragenden Damm aufweist.

Die Verhältnisse werden mit steigendem Sauerstoffgehalt - bis zur Verwendung technisch reinen Sauerstoffs - im Oxidationsgas zunehmend ungünstiger, weil die Gastemperaturen und die Reaktivität der Gase aufgrund höherer Schadstoffkonzentrationen steigen, obwohl die Gasmengen abnehmen. Dadurch werden die Feuerfest-Werkstoffe des Ofens und seiner Zusatzaggregate stark gefährdet.

Durch die EP 0 086 858 A1 ist eine als "Deep Refiner®" bekannt gewordene Schmelzwanne für Glas bekannt, bei der zwischen einer mit Bodenelektroden versehenen Schmelzzone und einer noch tieferen Läuterzone eine schräg bis zu einem Flachteil ansteigende Bodenerhebung, aber keine Stufe oder dgl. angeordnet ist. Durch die Bodenelektroden und gegebenenfalls zusätzliche Bubbler in der Schmelzzone werden vertikale Umlaufströmungen in Form mehrerer Strömungswalzen erzeugt. Über dem Flachteil sind weitere Seitenwand-Elektroden angeordnet, um an dieser Stelle die höchste Temperatur im Ofen zu erzeugen. Auch in der tiefen Läuterzone können weitere Elektroden angeordnet sein. Das Flachteil dient dabei als zusätzliche Läuterzone. Die Erzeugung von Schmelzen aus hochschmelzenden Gläsern mit ausdampfbaren Bor- und Alkalimetalloxiden, insbesondere von Borosilikatgläsern, ist ebensowenig beschrieben wie die Versorgung der Brenner mit sauerstoffreichen Oxidationsgasen.

Durch die FR 2 737 487 A1 ist es bekannt, in einer überwiegend durch Brenner und Oxidationsgase mit hohem Sauerstoffanteil beheizten Glasschmelzwanne für die Flach- oder Floatglasherstellung zwischen einer stromaufwärts gelegenen Schmelzzone und einer stromabwärts gelegenen Läuterzone, deren Böden in der gleichen waagrechten Ebene liegen und die beide die gleiche Tiefe aufweisen, eine von Seitenwand zu Seitenwand durchgehende Bodenerhebung anzuordnen, die einen als wichtig bezeichneten trapezförmigen Querschnitt, gegebenenfalls mit konkaven Flanken, aufweist. Durch die kombinatorische Wirkung mit beiderseits der Bodenerhebung angeordneten Reihen von Bodenelektroden und einer stromaufwärts der ersten Elektrodenreihe vorgelagerten Bubbler-Reihe werden beiderseits der Bodenerhebung in der Glasschmelze zwei streng voneinander getrennte Strömungswalzen aus relativ kühlem Glas erzeugt, zwischen denen mittels der Bodenelektroden senkrecht über der Bodenerhebung eine heiße Zone erzeugt wird. Dadurch soll eine Rückströmung von Glas aus der Läuterzone in die Schmelzzone verhindert werden. Die Höhe der Bodenerhebung soll dabei maximal die Hälfte, vorzugsweise etwa 1/4 bis 1/3 der Glasbadtiefe betragen. Eine geringere Badtiefe über der Bodenerhebung wird mit dem Hinweis auf starke Korrosion ausdrücklich ausgeschlossen. Die Bodenerhebung ist infolgedessen keine Läuterbank, über der üblicherweise eine laminare Horizontalströmung geringer Badtiefe, jedoch mit größerer Verweilzeit erzeugt wird. Auch ist der Bodenerhebung keine Stufe vorgelagert, in der Elektroden angeordnet sind. Die Produktionsmenge des nicht hochschmelzenden Glases soll zwischen 100 und 1000 Tonnen pro Tag liegen. Der Leistungsbedarf der Bodenelektroden ist mit beispielsweise 1500 kW beträchtlich. Die Trennwirkung der Kombination aus Bodenerhebung und Bodenelektroden ist so beträchtlich, daß die Umstellung der Farben der Glasschmelze in kürzester Zeit möglich ist.

Der Erfindung liegt daher die Aufgabe zugrunde, ein Verfahren und eine Vorrichtung anzugeben, durch die hochschmelzende Gläser mit flüchtigen Komponenten, insbesondere solche aus der Gruppe Borglas und Borosilikatglas, mittels sauerstoffreicher Oxidationsgase ohne nennenswerte Entmischung bzw. Phasentrennung und bei größtmöglicher Schonung der Ofenbaustoffe zuverlässig mit hoher Qualität und störungsfrei erschmolzen werden können.

Die Lösung der gestellten Aufgabe erfolgt hinsichtlich des Verfahrens erfindungsgemäß dadurch, daß
a) im Oberofen durch die Versorgung des Brennraums mit einem Oxidationsgas, das mindestens 50 Volumenprozent Sauerstoff enthält, eine Temperatur von mindestens 1600 °C erzeugt wird,
b) als Bodenerhebung eine Läuterbank mit einer vorgelagerten Stufe verwendet wird, die mindestens 150 mm hoch ist und deren Höhe "H1" zwischen dem 0,3-fachen und dem 0,7-fachen der Höhe "H2" der Läuterbank beträgt, wobei von der Stufe mindestens eine quer zur Strömungsrichtung der Schmelze verlaufende Reihe von Booster-Elektroden nach oben ragt,
c) die Schmelze vor der Stufe über mindestens eine im Wannenboden befindliche Bubbler-Reihe geführt wird, und daß
d) die Schmelze hinter der Stufe mit den Booster-Elektroden in hocherhitztem Zustand auf einer Länge von 800 mm bis 2000 mm über die Läuterbank geführt wird, deren im wesentlichen waagrechte Oberseite einen maximalen Abstand "T" von 300 mm vom Schmelzenspiegel aufweist.

Die Länge der Läuterbank, in Strömungsrichtung gesehen, bemißt sich dabei nach der mittleren Verweilzeit der Schmelze auf der Läuterbank bei Vollast der Wanne. Diese Verweilzeit bestimmt sich wiederum nach der Dauer des Läuterprozesses, und die Länge der Läuterbank läßt sich aus dem Durchsatz und dem Strömungsquerschnitt, d.h. aus der Strömungsgeschwindigkeit berechnen.

Vorzugsweise wird beim Schritt a) eine Temperatur von mindestens 1650 °C erzeugt.

Durch das erfindungsgemäße Verfahren wird die gestellte Aufgabe in vollem Umfange gelöst. Bei einer Auslegung der Schmelzleistung des Ofens für beispielhaft 40 t/Tag und bei einer Schmelzbadoberfläche von 12200 mm x 3800 mm können bei Verwendung von technisch reinem Sauerstoff als Oxidationsgas ohne weiteres Ofenraumtemperaturen von 1680 bis 1700 °C erreicht werden. Dadurch wird der Bildung von Cristobalit, die durch die Verdampfung von beispielsweise B₂O₃ erfolgen kann, durch Aufschmelzen der Kristalle wirksam entgegengewirkt.

Sowohl durch die Bubbler-Reihe als auch durch die Stufe mit den Booster-Elektroden wird der Schmelzbereich strömungstechnisch von der Läuterbank getrennt, ohne daß es irgendwelcher in die Schmelze eintauchender Trennwände, Dämme, Wälle oder dergleichen bedarf. Bei den durchgeführten Versuchen waren innerhalb des Wandabstandes der Schmelzwanne von 3800 mm sechs Bubbler und sechs Booster-Elektroden in jeweils einer Reihe angeordnet.

Die Läuterung der Glasschmelze erfolgt in einem Dünnschichtbereich über der Läuterbank. Hier erreicht die Schmelze die zur intensiven Läuterung erforderliche hohe Temperatur und folglich die günstigste Viskosität.

Durch die relativ hohe Strömungsgeschwindigkeit, die bei der angegebenen Auslegung im Mittel 1 m/h beträgt, kann auf der Läuterbank keine merkliche B₂O₃-Verdampfung stattfinden, so daß die für die betreffenden Gläser typische Schlieren- und Windenbildung praktisch verhindert wird. Hinter der Läuterbank gelangt die klare Schmelze in einen Abstehraum, von dem aus die Verteilung in die Vorherde erfolgen kann. Der Gehalt an Stickoxiden in den Abgasen liegt weit unterhalb des gesetzlichen Grenzwertes.

Es ist dabei besonders vorteilhaft, wenn - entweder einzeln oder in Kombination - folgende Bedingungen eingehalten werden:
* Es wird eine Stufe verwendet, deren Höhe "H1" zwischen dem 0,4-fachen und dem 0,6-fachen der Höhe "H2" der Läuterbank beträgt;
* Die Schmelze wird mit einer mittleren Verweilzeit von 0,5 bis 2,0 Stunden über die Läuterbank geführt;
* Die Schmelze wird mit einer mittleren Verweilzeit von 1,0 bis 1,5 Stunden über die Läuterbank geführt;
* Die Schmelze wird im Schmelzbereich über ein Feld von Bodenelektroden geführt. In Versuchen hat sich ein Optimum bei 12 Bodenelektroden in drei Reihen herausgestellt, bei denen die Distanz der Reihen in Richtung Bubbler zunimmt, um dort, wo mehr Energie zum Schmelzen gebraucht wird, auch mehr Energie zur Verfügung zu haben. Außerdem können die einzelnen Elektrodengruppen auch senkrecht zur Wannenachse getrennt beaufschlagt werden, um eine Asymmetrie in Querrichtung der Wanne aussteuern bzw. ausregeln zu können, und um eine symmetrische Temperaturverteilung erreichen zu können.

Die Erfindung soll gerade die Ausbildung einer Strömungswalze durch die Booster-Elektroden verhindern und deren Energie der Läuterbank zuführen. Es ist darauf zu achten, daß die Distanz der Bubbler zur Vorderkante der Stufe entsprechend der Badtiefe und der Höhe der Läuterbank sowie der Steilheit der Viskositätskurve bzw. dem Temperaturgradienten zwischen Oberfläche und Bodenglas ausgeführt ist. Im Normalfall wird diese Distanz etwa gleich der Badtiefe gewählt.

Die Bubbler bewirken eine Strömungswalze, wobei sie Glas von unten anziehen und an die Oberfläche des Glasbades transportieren. Dabei wird kälteres Glas schneller wieder absinken als das heißere Glas. Es kommt innerhalb der Strömungswalze, insbesondere in Strömungsrichtung des Glases, zu einer Separation des heißen und des kalten Glases. Die Kante der Stufe wirkt dabei wie ein Strömungsteiler, so daß das kältere Glas nach unten absinkt, wieder in die Wurzel der Bubbler gelangt und natürlich infolge des Mischeffektes zum Teil wieder in die Strömungsrichtung vor den Bubblern geführt wird.

Das heißere Glas, welches oberhalb der Strömungskante auf die halbhohe Stufe strömt, hat somit eine höhere Temperatur. Dazu kommt, daß infolge der Tatsache, daß der Strömungsquerschnitt hier schon wesentlich kleiner als im normalen Glasbad ist, die Rückströmung aus diesem Teil schon sehr stark reduziert wird.

Durch die Anordnung einer Elektrodenreihe auf dieser Stufe, die zweckmäßig darin besteht, daß man sechs Elektroden in eine Reihe setzt und die Phasen "R-S-T / R-S-T" benennt, bekommt man eine relativ gleichmäßige Aufheizung des Glases auf dieser Stufe, verbunden mit einer Aufwärtsströmung, die dafür sorgt, daß das Glas zu einem Teil dort schon an die Oberfläche transportiert wird, ohne daß es zu einer nennenswerten Rückströmung in die Schmelzwanne kommt. Selbstverständlich ist es möglich, alle Elektroden auch mit Einphasenströmen zu betreiben.

Dadurch gelingt es, die Temperatur des Glases, das auf die eigentliche Läuterbank strömt, mit Hilfe der Booster-Elektroden auf einen gewünschten Wert zu bringen. Das ist insbesondere bei Borosilikatglas sehr wichtig, weil dort wesentlich höhere Läutertemperaturen als bei Kalk-Natron-Glas benötigt werden. Auf der anderen Seite aber, wenn die Temperatur dadurch erreicht werden muß, daß von oben sehr viel Energie in das Glasbad eingegeben wird, sind die Verdampfungsraten wesentlich höher, als wenn das erfindungsgemäß über Elektroden geschieht.

Die Energiemenge, die benötigt wird, um eine Glasmenge auf eine bestimmte Temperatur zu erhöhen, ist infolge der niedrigen Wärmekapazität des Glases von 1,26 kJ/kg °C Glas in diesem Temperaturbereich relativ niedrig. Die Oberflächen der Elektroden müssen infolgedessen nicht sehr groß sein, weil die gesamte Energiemenge, die dort hineingegeben wird, wie gesagt keine sehr hohen Werte annimmt.

Wichtig ist allerdings, daß eine gleichmäßige Verteilung der Elektroden über den Querschnitt gegeben ist, um überall eine Aufströmung zu erzielen. Das ist mit Bodenelektroden, die in einer Reihe stehen, wesentlich besser als mit Seitenelektroden zu erreichen. Es hat sich gezeigt, daß die Rückströmung durch die Tatsache, daß die Elektroden eine Aufwärtsbewegung über der Stufe bewirken, noch einmal abgebremst wird, so daß nur vergleichsweise geringe Glasmengen zurück in den Bubbler-Bereich transportiert werden.

Die Erfindung betrifft auch einen Glasschmelzofen zum Herstellen von hochschmelzenden Gläsern mit verdampfbaren Komponenten, insbesondere von Gläsern aus der Gruppe Borgläser und Borosilikatgläser, mit einer Ofenlängsachse (A-A), einem Oberofen mit einem Brennraum ohne innere Trennwände, mit Brennern für fossile Brennstoffe und mit einer Schmelzwanne, die einen Schmelzbereich, einen Wannenboden und vor einem Abstehteil und einem Durchlaß zu einem Entnahmeteil eine stufenförmig ausgebildete Bodenerhebung besitzt, die über die gesamte Breite der Schmelzwanne durchgehend ausgebildet ist.

Zur Lösung der gleichen Aufgabe ist ein solcher Glasschmelzofen erfindungsgemäß dadurch gekennzeichnet, daß
a) die Bodenerhebung eine Läuterbank mit einer vorgelagerten Stufe ist, die mindestens 150 mm hoch ist und deren Höhe "H1" zwischen dem 0,3-fachen und dem 0,7-fachen der Höhe "H2" der Läuterbank beträgt, wobei von der Oberseite der Stufe mindestens eine quer zur Ofenlängsachse (A-A) verlaufende Reihe von Booster-Elektroden nach oben ragt,
b) vor der Stufe mindestens eine im Wannenboden befindliche Bubbler-Reihe angeordnet ist und
c) die Läuterbank entlang der Ofenlängsachse (A-A) eine Länge "L2" zwischen 800 mm und 2000 mm und in der Höhe einen Abstand "T" von maximal 300 mm vom konstruktiv vorgesehenen Schmelzenspiegel aufweist.

Es ist dabei im Zuge weiterer Ausgestaltungen des Erfindungsgegenstandes wiederum besonders vorteilhaft, wenn - entweder einzeln oder in Kombination - folgende Konstruktionsvorschriften erfüllt sind:
* Der Abstand "T" der waagrechten Oberseite der Läuterbank vom konstruktiv vorgesehenen Schmelzenspiegel beträgt zwischen 100 mm und 175 mm, und die Länge "L2" der Läuterbank in Richtung der Ofenlängsachse (A-A) beträgt zwischen 1000 mm und 1500 mm;
* Das Verhältnis von Länge "L1" der Stufe zur Länge "L2" der Läuterbank - jeweils in Richtung der Ofenlängsachse (A-A) gesehen - beträgt zwischen 0,4 und 0,6;
* Bei Anordnung einer Reihe von Booster-Elektroden liegen deren Achsen auf einer geraden Linie, die sich im Abstand "L3" von (0,4 bis 0,6)x "L1" von der Vorderkante der Stufe befindet;
* Die Booster-Elektroden bestehen aus mit Drehstrom versorgbaren Dreiergruppen, die elektrisch in der Reihenfolge "R-S-T" oder alternativ einphasig geschaltet sind;
* Die Bubbler weisen untereinander einen Abstand "d" von 300 mm bis 600 mm und die Bubbler-Reihe einen Abstand "L4" von (0,3 bis 0,6)x "L1" von der Vorderkante der Stufe auf;
* Der Glasschmelzofen ist als Querflammenofen ausgebildet;
* Im Schmelzbereich ist ein Feld von Bodenelektroden angeordnet.

Der Abstand bzw. die Dichte der Bubbler und Booster-Elektroden untereinander pro Längeneinheit (quer zur Strömungsrichtung der Schmelze) und der Abstand der Bubbler-Reihe(n) von der Stufe bzw. Läuterbank (in Strömungsrichtung der Schmelze) kann durch Versuche bestimmt werden.

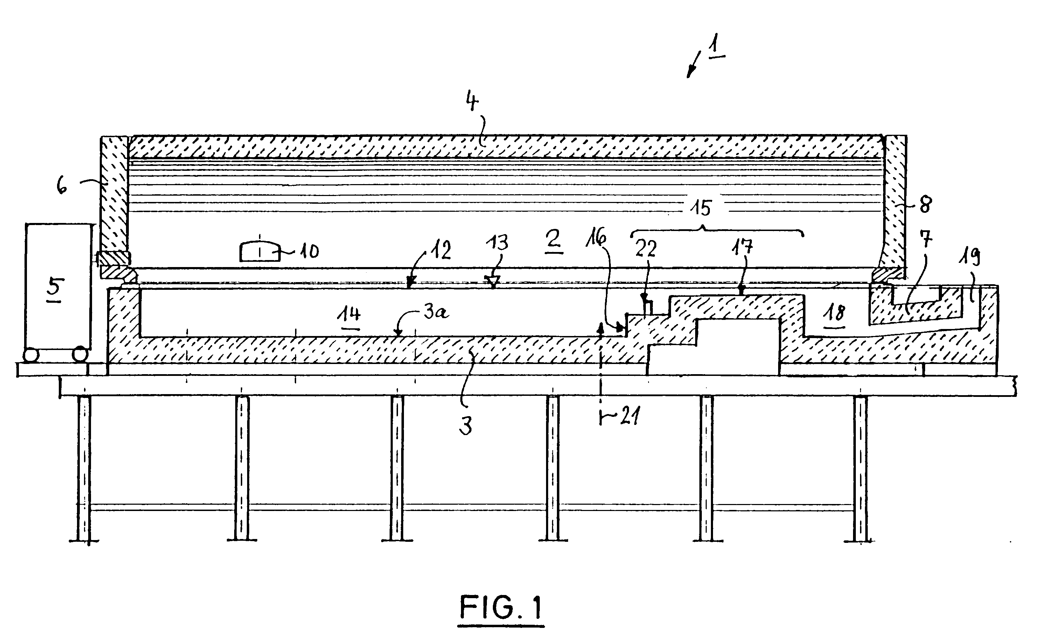

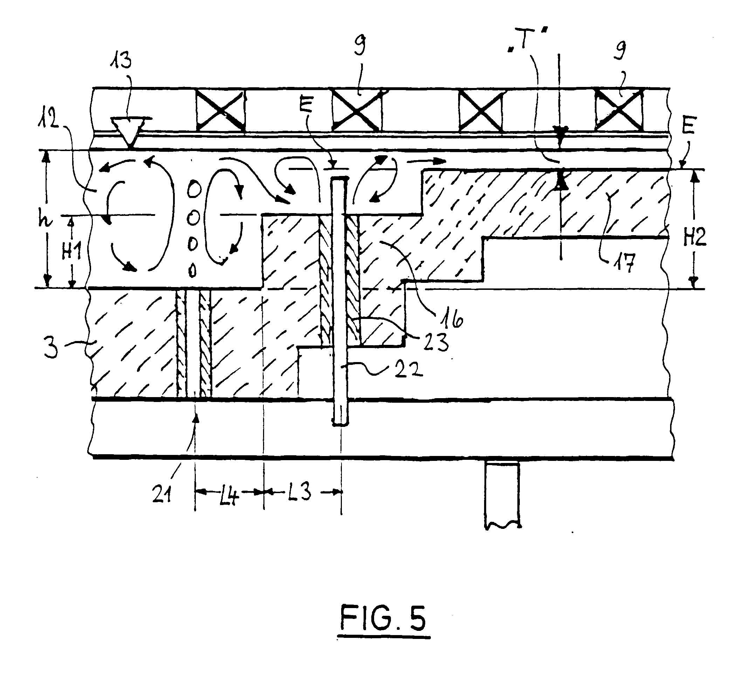

Ein Ausführungsbeispiel des Erfindungsgegenstandes wird nachfolgend anhand der Figuren 1 und 5 näher erläutert.

Es zeigen:
- Figur 1: einen vertikalen Längsschnitt durch den vollständigen Ofen entlang der Ofenlängsachse (A-A) in Figur 2,
- Figur 2: eine Draufsicht auf die Schmelzwanne von Figur 1 bei abgenommenem Oberofen,
- Figur 3: den rechten Teil von Figur 1 in vergrößertem Maßstab,
- Figur 4: eine perspektivische Teildarstellung des Gegenstandes nach Figur 3, und
- Figur 5: einen Ausschnitt aus Figur 3 in wiederum vergrößertem Maßstab.

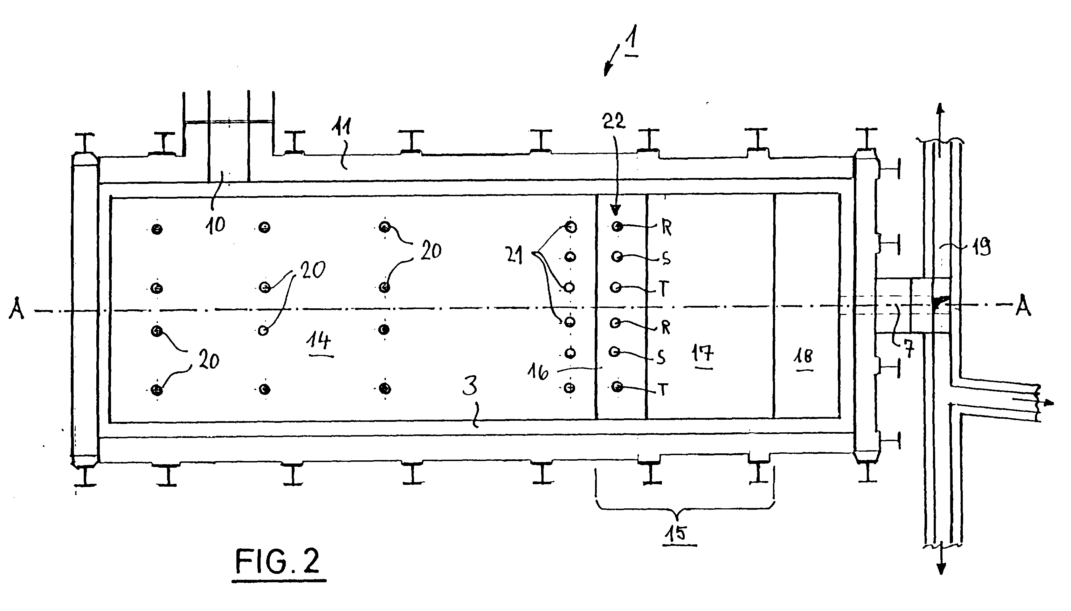

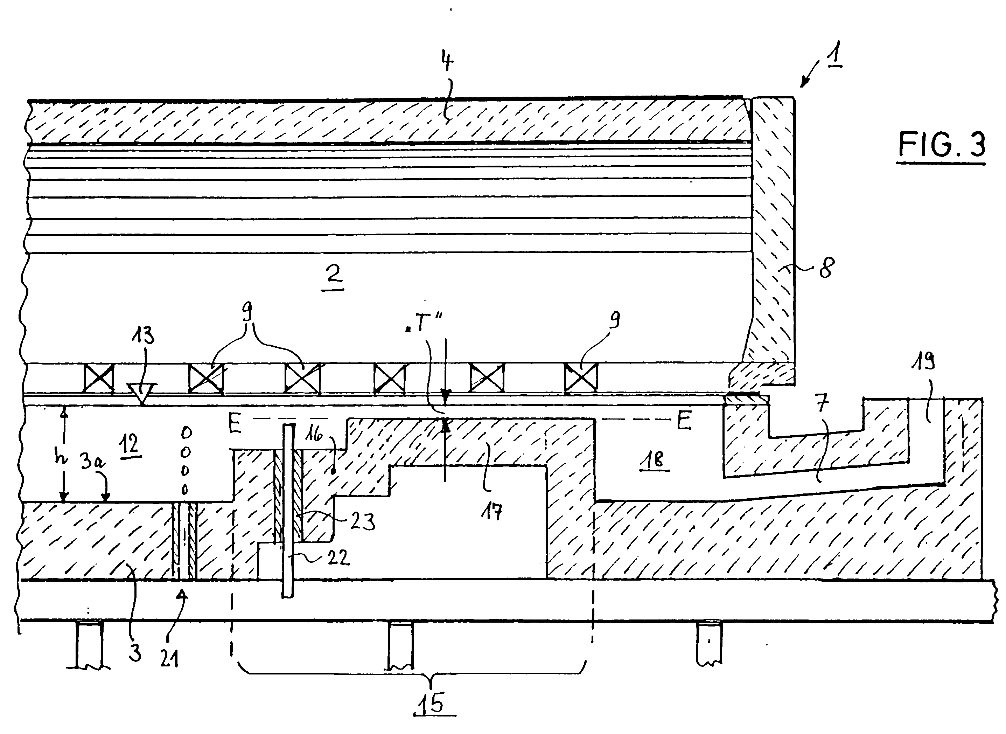

In den Figuren 1 und 2 ist ein Ofen 1 dargestellt, der eine Schmelzwanne 3 und einen Oberofen 4 mit einem Brennraum 2 besitzt. Dieser ist auf der Beschickungsseite mit einer Einlegemaschine 5 durch eine erste Stirnwand 6 und auf der Entnahmesseite mit einem Durchlaß 7 durch eine zweite Stirnwand 8 abgeschlossen. In den Seitenwänden befinden sich Reihenanordnungen von Brennern 9, von denen einige in den Figuren 3, 4 und 5 schematisch dargestellt sind. Die Brennergase entweichen durch eine Öffnung 10 in einer der Seitenwände 11, werden also im Gegenstrom zu einer Glasschmelze 12 mit einem Schmelzenspiegel 13 und dem darauf schwimmenden Beschikkungsgut geführt. Wie dargestellt, ist der Oberofen 4 nach Art eines "Unit Melters" unterhalb seiner Gewölbedecke glatt, besitzt also keine inneren Trennwände.

Die Schmelzwanne 3 hat anfangs einen ebenen Boden 3a und einen quadratischen Umriß und weist von links nach rechts folgende Bereiche bzw. Teilabschnitte auf: An einen Schmelzteil 14 schließt sich eine Bodenerhebung 15 an, die aus einer Stufe 16 und einer Läuterbank 17 besteht, die sich beide über die volle Breite der Schmelzwanne 3 erstrecken (Figur 2). Jenseits der Bodenerhebung 15 folgt ein Abstehteil 18, von dem der Durchlaß 7 zu einem Entnahmeteil 19 führt, der mit hier nicht gezeigten Speisern verbunden ist, an deren Ende sich Entnahmestellen befinden (Pfeil in Figur 2, rechts).

Die Oberseiten 16a und 17a von Stufe 16 und Läuterbank 17 werden durch waagrechte ebene Flächen gebildet, von denen die Ebene "E-E" in den Figuren 3, 4 und 5 besonders hervorgehoben ist. Die Stufe 16 und die Läuterbank 17 besitzen geradlinige Vorderkanten 16b bzw. 17b und senkrechte Vorderflächen 16c und 17c (Figur 3).

Im Schmelzbereich 14 befinden sich drei Reihen von je vier Bodenelektroden 20, wobei diese Reihen senkrecht zur Ofenlängsachse (A-A) verlaufen und die Abstände in Strömungsrichtung (von links nach rechts) zunehmen. Die Umrißlinien der äußeren Elektroden bilden ein "Feld". Vor der Stufe 16 befindet sich im Boden 3a eine Reihe von sechs Bubblern 21, und aus der Oberseite 16a der Stufe 16 ragen sechs Booster-Elektroden 22 nach oben, die in der Reihenfolge "R-S-T / R-S-T" gepolt sind oder an drei Einphasentransformatoren angeschlossen sein können (Figur 2).

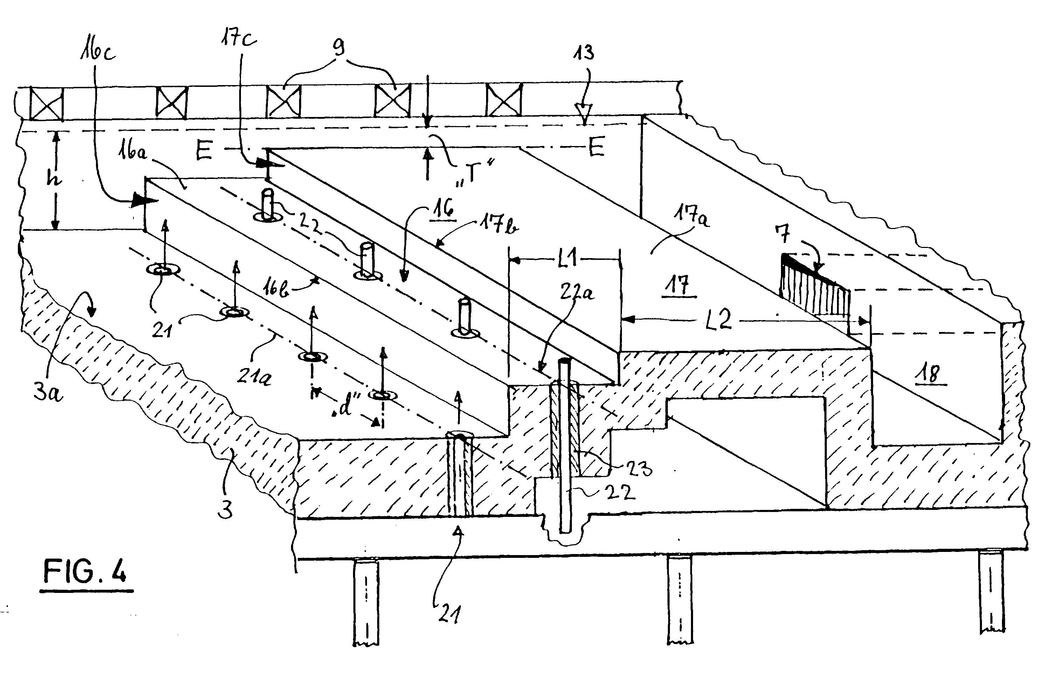

Aus den Figuren 3 und 4 geht folgendes deutlicher hervor: Die Booster-Elektroden 22 ragen aus jeweils einem gekühlten Halter 23 senkrecht nach oben bis knapp unter die Ebene "E-E"; sie können aber auch über diese Ebene überstehen und sogar bis zum Schmelzenspiegel 13 reichen. Die Schmelzbadtiefe "h" beträgt z.B. 800 mm; der Abstand "T" zwischen der Ebene "E-E" und dem Schmelzenspiegel z.B. 125 mm, d.h., die Läuterbank 17 hat eine Höhe "H2" von 675 mm. Die Stufe 16 davor hat eine Höhe "H1" von beispielhaft 400 mm (Figur 5).

Die Figuren 4 und 5 zeigen noch ergänzend folgendes: Die äquidistant verteilten Bubbler 21 liegen auf einer geraden Linie 21a (strichpunktiert) und haben untereinander einen Abtand von 300 mm bis 600 mm, und die Linie 21a hat von der Vorderkante 16b der Stufe 16 einen Abstand "L4" von etwa 0,5 x "L1". Die gleichfalls äquidistant verteilten Booster-Elektroden 22 liegen auf einer geraden Linie 22a (strichpunktiert) und haben ähnliche Abstände voneinander. Die Linie 22a liegt in der Mitte der Stufe 16 und hat einen Abstand "L3" von etwa 0,5 x "L1" von der Vorderkante 16b der Stufe 16, allerdings in der entgegengesetzten Richtung.

Die Reihe der Bubbler 21 erzeugt u.a. eine starke Strömungswalze in Richtung auf das Eingabeende des Ofens 1 und verhindert dadurch das Eindringen von ungeschmolzenem Beschickungsgut in den Bereich der Stufe 16. Die Strömungsbeeinflussung durch die Bubbler 21 über der Stufe 16 ist jedoch wesentlich geringer. An dieser Stelle sind die Booster-Elektroden 22 durch eigene, thermisch bedingte Strömungswalzen wirksam, die wegen der relativ geringen Strömungsbeeinflussung durch die Bubbler 21 die über der Stufe 16 befindliche Glasschmelze stark erhitzen, so daß diese auf die Läuterbank 17 übertritt und dort wirksam geläutert wird, ohne daßhierfür eine übermäßige Beheizung durch fossile Brennstoffe nötig würde.

Diese Abschirmwirkung ist um so stärker, je höher die Stufe über dem Wannenboden 3a (Maß "H1") im Verhältnis zur Höhe der Läuterbank über dem Wannenboden 3a (Maß "H2") ist. Die Höhe "H1" der Stufe findet ihre Grenze beim 0,7-fachen der Höhe "H2" nur darin, daß über der Stufe noch eine (geringe) Glasmenge vorhanden sein muß, in der die Booster-Elektroden ihre Wirkung entfalten können. Die Gasanschlüsse für die Bubbler 21 und die Stromanschlüsse für die Booster-Elektroden sind der Einfachheit halber fortgelassen worden.

### Bezugszeichenliste:

| | |
|---|---|
| 1 | Glasschmelzofen |
| 2 | Brennraum |
| 3 | Schmelzwanne |
| 3a | Wannenboden |
| 4 | Oberofen |
| 5 | Einlegemaschine |
| 6 | erste Stirnwand |
| 7 | Durchlaß |
| 8 | zweite Stirnwand |
| 9 | Brenner |
| 10 | Öffnung |
| 11 | Seitenwände |
| 12 | Glasschmelze |
| 13 | Schmelzenspiegel |
| 14 | Schmelzteil |
| 15 | Bodenerhebung |
| 16 | Stufe |
| 16a | Oberseite |
| 16b | Vorderkante |
| 16c | Vorderfläche |
| 17 | Läuterbank |
| 17a | Oberseite |
| 17b | Vorderkante |
| 17c | Vorderfläche |
| 18 | Abstehteil |
| 19 | Entnahmeteil |
| 20 | Bodenelektrode |
| 21 | Bubbler |
| 21a | Linie |
| 22 | Booster-Elektroden |
| 22a | Linie |
| 23 | Halter |

## Patentansprüche

1. Verfahren zum Herstellen von hochschmelzenden Gläsern mit verdampfbaren Komponenten, insbesondere von Gläsern aus der Gruppe Borgläser und Borosilikatgläser mit den Schritten Schmelzen und Läutern einer Schmelze (12) in einem Ofen (1) mit einem Oberofen (4) mit einem Brennraum (2) ohne innere Trennwände, mit Brennern (9) für fossile Brennstoffe und mit einer Schmelzwanne (3), die einen Schmelzbereich (14), einen Wannenboden (3a) und vor einem Abstehteil (18) und einem Durchlaß (7) zu einem Entnahmeteil (19) eine stufenförmig ausgebildete Bodenerhebung (15) besitzt, die über die gesamte Breite der Schmelzwanne (3) durchgehend ausgebildet ist, **dadurch gekennzeichnet, daß**
a) im Oberofen (4) durch die Versorgung des Brennraums (2) mit einem Oxidationsgas, das mindestens 50 Volumenprozent Sauerstoff enthält, eine Temperatur von mindestens 1600 °C erzeugt wird,
b) als Bodenerhebung (15) eine Läuterbank (17) mit einer vorgelagerten Stufe (16) verwendet wird, die mindestens 150 mm hoch ist und deren Höhe "H1" zwischen dem 0,3-fachen und dem 0,7-fachen der Höhe "H2" der Läuterbank (17) beträgt, wobei von der Stufe (16) mindestens eine quer zur Strömungsrichtung der Schmelze (12) verlaufende Reihe von Booster-Elektroden (22) nach oben ragt,
c) die Schmelze (12) vor der Stufe (16) über mindestens eine im Wannenboden (3a) befindliche Reihe von Bubblern (21) geführt wird, und daß
d) die Schmelze (12) hinter der Stufe (16) mit den Booster-Elektroden (22) in hocherhitztem Zustand auf einer Länge von 800 mm bis 2000 mm über die Läuterbank (17) geführt wird, deren im wesentlichen waagrechte Oberseite (17a) einen maximalen Abstand "T" von 300 mm vom Schmelzenspiegel (13) aufweist.

2. Verfahren nach Anspruch 1, **dadurch gekennzeichnet, daß** eine Stufe (16) verwendet wird, deren Höhe "H1" über dem Wannenboden (3a) zwischen dem 0,4-fachen und dem 0,6-fachen der Höhe "H2" der Läuterbank (17) über dem Wannenboden (3a) beträgt.

3. Verfahren nach Anspruch 1, **dadurch gekennzeichnet, daß** die Schmelze (12) mit einer mittleren Verweilzeit von 0,5 bis 2,0 Stunden über die Läuterbank (17) geführt wird.

4. Verfahren nach Anspruch 3, **dadurch gekennzeichnet, daß** die Schmelze (12) mit einer mittleren Verweilzeit von 1,0 bis 1,5 Stunden über die Läuterbank (17) geführt wird.

5. Verfahren nach Anspruch 1, **dadurch gekennzeichnet, daß** die Schmelze (12) im Schmelzbereich (14) über ein Feld von Bodenelektroden (20) geführt wird.

6. Verfahren nach Anspruch 1, **dadurch gekennzeichnet, daß** die Ofenabgase entgegen der Horizontalkomponente der Schmelzenströmung über das Beschickungsgut geführt werden.

7. Glasschmelzofen zum Herstellen von hochschmelzenden Gläsern mit verdampfbaren Komponenten, insbesondere von Gläsern aus der Gruppe Borgläser und Borosilikatgläser, mit einer Ofenlängsachse (A-A), einem Oberofen (4) mit einem Brennraum (2) ohne innere Trennwände, mit Brennern (9) für fossile Brennstoffe und mit einer Schmelzwanne (3), die einen Schmelzbereich (14), einen Wannenboden (3a) und vor einem Abstehteil (18) und einem Durchlaß (7) zu einem Entnahmeteil (19) eine stufenförmig ausgebildete Bodenerhebung (15) besitzt, die über die gesamte Breite der Schmelzwanne (3) durchgehend ausgebildet ist, **dadurch gekennzeichnet, daß**
a) die Bodenerhebung (15) eine Läuterbank (17) mit einer vorgelagerten Stufe (16) ist, die mindestens 150 mm hoch ist und deren Höhe "H1" über dem Wannenboden (3a) zwischen dem 0,3-fachen und dem 0,7-fachen der Höhe "H2" der Läuterbank (17) über dem Wannenboden (3a) beträgt, wobei von der Oberseite (16a) der Stufe (16) mindestens eine quer zur Ofenlängsachse (A-A) verlaufende Reihe von Booster-Elektroden (22) nach oben ragt,
b) vor der Stufe (16) mindestens eine im Wannenboden (3a) befindliche Reihe von Bubblern (21) angeordnet ist, und daß
c) die Läuterbank (17) entlang der Ofenlängsachse (A-A) eine Länge "L2" zwischen 800 mm und 2000 mm und in der Höhe einen Abstand "T" von maximal 300 mm vom konstruktiv vorgesehenen Schmelzenspiegel (13) aufweist.

8. Glasschmelzofen nach Anspruch 7, **dadurch gekennzeichnet, daß** der Abstand "T" der waagrechten Oberseite (17a) der Läuterbank (17) vom konstruktiv vorgesehenen Schmelzenspiegel (13) zwischen 100 mm und 175 mm beträgt und daß die Länge "L2" der Läuterbank (17) in Richtung der Ofenlängsachse (A-A) zwischen 1000 und 1500 mm beträgt.

9. Glasschmelzofen nach Anspruch 8, **dadurch gekennzeichnet, daß** das Verhältnis von Länge "L1" der Stufe (16) zur Länge "L2" der Läuterbank (17) - jeweils in Richtung der Ofenlängsachse (A-A) gesehen - zwischen 0,4 und 0,6 beträgt.

10. Glasschmelzofen nach Anspruch 9, **dadurch gekennzeichnet, daß** bei Anordnung einer Reihe von Booster-Elektroden (22) deren Achsen auf einer geraden Linie (22a) liegen, diese Linie (22a) sich im Abstand "L3" von (0,4 bis 0,6)x "L1" von der Vorderkante (16b) der Stufe (16) befindet.

11. Glasschmelzofen nach Anspruch 7, **dadurch gekennzeichnet, daß** die Stufe (16) eine waagrechte Oberseite (16a) und eine senkrechte Vorderfläche (16c) besitzt.

12. Glasschmelzofen nach Anspruch 7, **dadurch gekennzeichnet, daß** die Booster-Elektroden (22) aus mit Drehstrom versorgbaren Dreiergruppen bestehen, die elektrisch in der Reihenfolge "R-S-T" geschaltet oder an Einphasentransformatoren angeschlossen sind.

13. Glasschmelzofen nach Anspruch 7, **dadurch gekennzeichnet, daß** die Bubbler (21) untereinander einen Abstand "d" von 300 mm bis 600 mm und die Reihe von Bubblern (21) einen Abstand "L4" von (0,3 bis 0,6)x "L1" von der Vorderkante (16b) der Stufe (16) aufweisen.

14. Glasschmelzofen nach Anspruch 7, **gekennzeichnet durch** seine Ausbildung als Querflammenofen.

15. Glasschmelzofen nach Anspruch 7, **dadurch gekennzeichnet, daß** im Schmelzbereich (14) ein Feld von Bodenelektroden (20) angeordnet ist.

16. Glasschmelzofen nach Anspruch 7, **dadurch gekennzeichnet, daß** im Bereich des Beschickungsendes des Ofens (1) mindestens eine Abgasöffnung (10) für die Abgase des Brennraumes (2) angeordnet ist.

## Claims

1. Process for the manufacture of high melting glasses with evaporable components, in particular glasses of the group of boron glasses and boron silicate glasses with stages of melting and refining a melt (12) in a furnace (1) with a top furnace (4) with a combustion chamber (2) without internal separating walls, with torches (9) for fossil fuels and with a melting pot (3) having a melting area (14), a pot bottom (3a) and in front of a protruding member (18) and a passage (7) to a discharge member (19) a stepshaped base elevation (15) which is continuous over the entire width of the melting pot (3), **characterised in that**
a: a temperature of at least 1,600°C is generated in the upper furnace (4) by delivering to the combustion chamber (2) an oxidation gas containing at least 50 volume percent oxygen;
b: as a base elevation (15) is used a refining bank (17) with an upstream step (16) which is at least 150 mm high and the height "H1" of which lies between 0.3 and 0.7 times height "H2" of the refining bank (17), and from the step (16) protrudes in an upward direction at least one row of booster electrodes (22) which extends transversely to the flow direction of the melt (12);
c: the melt (12) upstream of the step (16) is ducted over at least one row of bubblers (21) located in the pot base (3a); and
d: the melt (12) is ducted behind the step (16) with the booster electrodes (22) in a highly heated state over a length of between 800 and 2,000 mm over the refining bank (17), the essentially horizontal top side (17a) of which has a maximum distance "T" of 300 mm from the melt mirror (13).

2. Process according to Claim 1, **characterised in that** a step (16) is used the height "H1" of which above the pot base (3a) is between 0.4 and 0.6 times height "112" of the refining bank (17) above the pot base (3a).

3. Process according to Claim 1, **characterised in that** the melt (12) is ducted with a mean residence time of between 0.5 and 2.0 hours over the refining bank (17).

4. Process according to Claim 3, **characterised in that** the melt (12) is ducted with a mean residence time of between 1.0 and 1.5 hours over the refining bank (17).

5. Process according to Claim 1, **characterised in that** the melt (12) is ducted in a melt area (14) over a field of ground electrodes (20).

6. Process according to Claim 1, **characterised in that** furnace waste gases are ducted against the horizontal component of the melt flow over the melting stock.

7. Glass melt furnace for manufacturing high melting glasses with evaporable components, in particular glasses of the group of boron glasses and boron silicate glasses, with a longitudinal furnace axis (A-A), a top furnace (4) with a combustion chamber (2) without internal separating walls, with torches (9) for fossil fuels and with a melting pot (3) comprising a melting area (14), a pot base (3a) and in front of a protruding member (18) and a passage (7) to a discharging member (19) a stepshaped base elevation (15) which is continuous over the entire width of the melting pot (3), **characterised in that**
a: the base elevation (15) is a refining bank (17) with an upstream step (16) which is at least 150 mm high and the height "H1" of which above the pot base (3a) is between 0.3 and 0.7 times height "H2" of the refining bank (17) above the pot base (3a), and from the top (16a) of the step (16) protrudes upwards at least one row of booster electrodes (22) extending transversely to the longitudinal axis of the furnace (A-A);
b: upstream of the step (16) is configured at least one row of bubblers (21) located in the pot base (3a); and
c: the refining bank (17) has along the longitudinal axis of the furnace (A-A) a length "L2" between 800 mm and 2,000 mm and in height a distance "T" of maximum 300 mm from the structurally provided melt mirror (13).

8. Glass melt furnace according to Claim 7, **characterised in that** distance "T" of the horizontal top (17a) of the refining bank (17) from the structurally provided melt mirror (13) is between 100 mm and 175 mm, and length "L2" of the refining bank (17) in the direction of the longitudinal axis of the furnace (A-A) is between 1,000 and 1,500 mm.

9. Glass melt furnace according to Claim 8, **characterised in that** the ratio of length "L1" of the step (16) and length "L2" of the refining bank (17), respectively seen in the direction of the longitudinal axis of the furnace (A-A), lies between 0.4 and 0.6.

10. Glass melt furnace according to Claim 9, **characterised in that** with an arrangement of a row of booster electrodes (22) their axes lie on a straight line (22a), and this line (22a) lies at a distance "L3" of (0.4 to 0.6) x "L1" from the front edge (16b) of the step (16).

11. Glass melt furnace according to Claim 7, **characterised in that** the step (16) comprises a horizontal top (16a) and a perpendicular front surface (16a).

12. Glass melt furnace according to Claim 7, **characterised in that** the booster electrodes (22) are composed of triple groups to be supplied with three-phase current which are electrically switched in the sequence "R-S-T" or connected to single-phase transformers.

13. Glass melt furnace according to Claim 7, **characterised in that** the bubblers (21) have a distance "d" of 300 mm to 600 mm between them, and the row of bubblers (21) has a distance "L4" of (0.3 to 0.6)x "L1" from the front edge (16b) of step (16).

14. Glass melt furnace according to Claim 7, **characterised by** its design as a transverse flame furnace.

15. Glass melt furnace according to Claim 7, **characterised in that** in the melt area (14) is configured a field of ground electrodes (20).

16. Glass melt furnace according to Claim 7, **characterised in that** in the area of the charge end of the furnace (1) is arranged at least one waste gas opening (19) for the waste gases of the combustion chamber (2).

## Revendications

1. Procédé pour la fabrication de verres à haute température de fusion et à composantes vaporisables, en particulier des verres parmi le groupe des verres au bore et des verres au borosilicate, avec les étapes que sont la fusion et l'affinage d'une fonte (12) dans un four (1) comportant un four supérieur (4) avec une chambre de combustion (2) sans parois de séparation internes, comportant des brûleurs (9) pour des combustibles fossiles et une cuve de fusion (3) qui possède une zone de fusion (14), un fond de cuve (3a) et, en avant d'une partie en saillie (18) et d'une traversée (7) vers une partie de prélèvement (19), une surélévation de fond (15) qui est réalisée en gradins et qui est réalisée en continu sur toute la largeur de la cuve de fusion (3), caractérisé en ce que :
a) on génère une température d'au moins 1600°C dans le four supérieur (4) par alimentation de la chambre de combustion (2) avec un gaz d'oxydation qui contient au moins 50 % en volume d'oxygène,
b) on utilise comme surélévation de fond (15) un banc d'affinage (17) présentant un gradin (16) agencé en amont, dont la hauteur est d'au moins 150 mm et dont la hauteur "H1" représente de 0,3 fois à 0,7 fois la hauteur "H2" du banc d'affinage (17), et au moins une rangée d'électrodes dites "booster" (22) qui s'étend perpendiculairement à la direction d'écoulement de la fonte (12) dépasse vers le haut depuis le gradin (16),
c) on amène la fonte (12) en avant du gradin (16) par-dessus au moins une rangée de souffleurs (21) situés dans le fond de cuve (3a), et
d) on amène la fonte (12) en arrière du gradin (16), dans un état hautement chauffé au moyen des électrodes booster (22), à une longueur de 800 mm à 2000 mm par-dessus le banc d'affinage (17) dont la face supérieure (17a) sensiblement horizontale présente une distance maximale "T" de 300 mm par rapport au niveau de fonte (13).

2. Procédé selon la revendication 1, caractérisé en ce que l'on utilise un gradin (16) dont la hauteur "H1" au-dessus du fond de cuve (3a) représente de 0,4 fois à 0,6 fois la hauteur "H2" du banc d'affinage (17) au-dessus du fond de cuve (3a).

3. Procédé selon la revendication 1, caractérisé en ce que la fonte (12) est menée par-dessus le banc d'affinage (17) avec une durée de séjour moyenne de 0,5 à 2,0 heures.

4. Procédé selon la revendication 3, caractérisé en ce que la fonte (12) est menée par-dessus le banc d'affinage (17) avec une durée de séjour moyenne de 1,0 à 1,5 heures.

5. Procédé selon la revendication 1, caractérisé en ce que la fonte (12) est menée par-dessus un champ d'électrodes de fond (20) dans la zone de fusion (14).

6. Procédé selon la revendication 1, caractérisé en ce que les gaz d'échappement du four sont menés en sens opposé à la composante horizontale de l'écoulement de fonte par-dessus la matière chargée.

7. Four de fusion de verre pour la fabrication de verres à haute température de fusion et à composantes vaporisables, en particulier des verres parmi le groupe des verres au bore et des verres au borosilicate, comportant un axe longitudinal de four (A-A), un four supérieur (4) avec une chambre de combustion (2) sans parois de séparation internes, comportant des brûleurs (9) pour des combustibles fossiles et une cuve de fusion (3) qui possède une zone de fusion (14), un fond de cuve (3a) et, en avant d'une partie en saillie (18) et d'une traversée (7) vers une partie de prélèvement (19), une surélévation de fond (15) qui est réalisée en gradins et qui est réalisée en continu sur toute la largeur de la cuve de fusion (3), caractérisé en ce que :
a) la surélévation de fond (15) est un banc d'affinage (17) présentant un gradin (16) agencé en amont, dont la hauteur est d'au moins 150 mm et dont la hauteur "H1" au-dessus du fond de cuve (3a) représente de 0,3 fois à 0,7 fois la hauteur "H2" du banc d'affinage (17) au-dessus du fond de cuve (3a), et au moins une rangée d'électrodes dites "booster" (22), qui s'étend perpendiculairement à l'axe longitudinal de four (A-A), dépasse vers le haut depuis la face supérieure (16a) du gradin (16),
b) au moins une rangée de souffleurs (21) située dans le fond de cuve (3a) est agencée an avant du gradin (16), et
c) le banc d'affinage (17) le long de l'axe longitudinal de four (A-A) présente une longueur "L2" de 800 mm à 2000 mm, et en hauteur une distance maximale "T" de 300 mm par rapport au niveau de fonte (13) prévu de par la structure.

8. Four de fusion de verre selon la revendication 7, caractérisé en ce que la distance "T" de la face supérieure horizontale (17a) du banc d'affinage (17) par rapport au niveau de fonte (13) prévu de par la structure est comprise entre 100 mm et 175 mm, et en ce que la longueur "L2" du banc d'affinage (17) en direction de l'axe longitudinal de four (A-A) est comprise entre 1000 et 1500 mm.

9. Four de fusion de verre selon la revendication 8, caractérisé en ce que la relation entre la longueur "L1" du gradin (16) et la longueur "L2"' du banc d'affinage (17), vues respectivement en direction de l'axe longitudinal de four (A-A), est comprise entre 0,4 et 0,6.

10. Four de fusion de verre selon la revendication 9, caractérisé en ce que pour un agencement d'une rangée d'électrodes booster (22), leurs axes se trouvent sur une ligne droite (22a), et en ce que cette ligne (22a) se trouve à une distance "L3" de (0,4 à 0,6) x "L1" depuis l'arête avant (16b) du gradin (16).

11. Four de fusion de verre selon la revendication 7, caractérisé en ce que le gradin (16) possède une face supérieure horizontale (16a) et une surface avant verticale (16c).

12. Four de fusion de verre selon la revendication 7, caractérisé en ce que les électrodes booster (22) sont constituées par des groupes de trois susceptibles d'être alimentées en courant triphasé, qui sont connectées électriquement dans l'ordre "R-S-T" ou bien branchées à des transformateurs monophasés.

13. Four de fusion de verre selon la revendication 7, caractérisé en ce que les souffleurs (21) présentent une distance "d" de 300 mm à 600 mm les uns des autres, et la rangée de souffleurs (21) présente une distance "L4" de (0,3 à 0,6) x "L1" par rapport à l'arête avant (16b) du gradin (16).

14. Four de fusion de verre selon la revendication 7, caractérisé par sa réalisation sous forme de four à flammes transversales.

15. Four de fusion de verre selon la revendication 7, caractérisé en ce qu'un champ d'électrodes de fond (20) est agencé dans la zone de fusion (14).

16. Four de fusion de verre selon la revendication 7, caractérisé en ce qu'il est prévu au moins une ouverture (10) pour les gaz d'échappement de la chambre de combustion (2) dans la zone de l'extrémité de chargement du four (1).
